# EUROPÄISCHE PATENTSCHRIFT

(11) **EP 3 222 491 B1**
(45) Veröffentlichungstag und Bekanntmachung des Hinweises auf die Patenterteilung: **10.11.2021**
(21) Anmeldenummer: 17159068.0
(22) Anmeldetag: 03.03.2017
(51) Int. Cl.: B62B 3/06, B66F 9/075, B60B 33/04

(54) **FLURFÖRDERZEUG MIT EINER STÜTZROLLE**
INDUSTRIAL TRUCK WITH A SUPPORT ROLLER
CHARIOT DE MANUTENTION AVEC UN GALET

(30) Priorität: 15.03.2016 DE 102016104746
(43) Veröffentlichungstag der Anmeldung: 27.09.2017
(73) Patentinhaber: Linde Material Handling GmbH, 63743 Aschaffenburg (DE)
(72) Erfinder: Pillot, Francois, 86530 Naintre (FR); Pedelucq, Julien, 86130 Jaunay-Clan (FR)
(74) Vertreter: Patentship Patentanwaltsgesellschaft mbH

(56) Entgegenhaltungen:
- EP-A1- 2 311 772
- EP-A1- 2 927 022
- EP-A2- 0 530 742
- DE-A1-102009 040 135

## Beschreibung

Die Erfindung betrifft eine Flurförderzeug mit einer Stützrolle, wobei das Flurförderzeug einen Antriebsteil aufweist, in dem ein lenkbares Antriebsrad angeordnet ist, wobei die Stützrolle in dem Antriebsteil von dem Antriebsrad seitlich beabstandet angeordnet ist und in vertikaler Richtung beweglich an dem Antriebsteil angeordnet ist, wobei die Stützrolle mittels einer Parallelogrammführung an dem Antriebsteil beweglich angeordnet ist.

Ein gattungsgemäßes Flurförderzeug ist aus der EP 0 530 742 A2 bekannt.

Flurförderzeuge mit einer oder mehreren seitlich von einem Antriebsrad in einem Antriebsteil angeordneten Stützrollen sind meist als Gabelhubwagen, beispielsweise Niederhubwagen oder Hochhubwagen oder Doppelstock-Hochhubwagen, als Schlepper oder als Kommissionierer, beispielsweise Niederhub- oder Hochhubkommissionierer, ausgeführt. Diese Flurförderzeuge können im Mitgängerbetrieb bzw. im Mitfahrerbetrieb betrieben werden. Für den Mitgängerbetrieb kann eine feste oder klappbare Fahrerstandplattform vorgesehen sein. Im Mitfahrerbetrieb ist eine Ausführung des Flurförderzeugs als Standgerät oder Sitzgerät möglich.

Der Antriebsteil derartiger Flurförderzeuge stützt sich mit einem lenkbaren Antriebsrad, das vorzugsweise vertikal starr am Flurförderzeug befestigt ist, und zumindest einer von dem Antriebsrad seitlich beabstandeten Stützrolle, die um eine vertikale Achse drehbar am Antriebsteil angeordnet und in vertikaler Richtung beweglich an dem Antriebsteil angeordnet ist, auf der Fahrbahn ab. Die Beweglichkeit der Stützrolle in vertikaler Richtung relativ zu dem Antriebsteil erfolgt mittels eines Abstützelements, mittels dem die Stützrolle in vertikaler Richtung federnd und/oder gedämpft am Antriebsteil abgestützt ist. Die Stützrolle ist nicht angetrieben und wird in der Regel nicht gebremst. Ein Lastteil eines derartigen Flurförderzeugs, der in der Regel von zwei seitlich beabstandeten Lastarmen gebildet ist, ist mittels zweier Lastrollen auf der Fahrbahn abgestützt, die in der Regel an den Spitzen der Lastarme angeordnet sind.

Hierbei sind Bauformen mit einem Vierradfahrwerk bekannt, bei denen das Antriebsrad seitlich im Abstand zur Fahrzeuglängsachse angeordnet ist und auf der hierzu gegenüberliegenden Seite des Antriebsteils eine von der Fahrzeuglängsachse seitlich beabstandete Stützrolle angeordnet ist. Neben derartigen Flurförderzeugen mit einem Vierradfahrwerk sind ebenfalls Flurförderzeuge mit einem Fünfradfahrwerk bekannt, bei denen das Antriebsrad in Fahrzeuglängsrichtung mittig am Antriebsteil befestigt ist und zwei Stützrollen an den Seiten des Antriebsteils seitlich beabstandet zur Fahrzeuglängsachse und des lenkbaren Antriebsrades angeordnet sind.

Die von dem Antriebsrad seitlich beabstandet angeordnete Stützrolle bzw. Stützrollen an dem Antriebsteil dienen hierbei zur Erhöhung der seitlichen Stabilität des Flurförderzeugs und sind hierzu in vertikaler Richtung beweglich an dem Antriebsteil angeordnet. Durch die vertikale Beweglichkeit der Stützrollen kann bei derartigen Flurförderzeugen vermieden werden, dass das Antriebsrad beispielsweise durch Bodenunebenheiten einen Teil der Aufstandskraft verliert, und sichergestellt werden, dass das Antriebsrad zur Übertragung der Antriebskräfte und Bremskräfte mit der Fahrbahn ständig in Kontakt steht. Zudem soll durch die vertikale Beweglichkeit der Stützrolle ein Verschleiß des Antriebsrades ausgeglichen werden

Aus der EP 2 311 772 A1 und der DE 197 53 412 A1 sind derartige Flurförderzeuge mit einem Antriebsrad und seitlich beabstandet von dem Antriebsrad angeordneten Stützrollen bekannt, die mittels einer Feder-Dämpfer-Einrichtung auf der Fahrbahn abgestützt sind. Die Stützrollen sind um eine horizontale Drehachse drehbar in einer Schwinge gelagert, die wiederum um eine horizontale Schwenkachse in einem Drehschemel schwenkbar gelagert ist. Der Drehschemel ist an dem Antriebsteil um eine vertikale Achse drehbar gelagert. Bei einer vertikalen Bewegung der Stützrolle verschwenkt die Schwinge um die horizontale Schwenkachse, so dass die Stützrolle um eine Kreisbahn verschwenkt wird. Bei einem Verschleiß des Antriebsrades ergibt sich somit durch das Verschwenken der Stützrolle um die Kreisbahn eine entsprechend große Veränderung des Aufstandspunktes der Stützrolle auf der Fahrbahn.

Als Abstützelement, mit dem die Stützrolle in vertikaler Richtung federnd und/oder gedämpft am Antriebsteil abgestützt ist, können bei gattungsgemäßen Stützrollen unterschiedliche Arten von Abstützelementen vorgesehen sein. Je nach Ausführung und Leistungsfähigkeit des Flurförderzeugs kann eine reine Gummifeder, oder alternativ ein Stoßdämpfer mit Feder oder alternativ ein absperrbarer Hydraulikzylinder vorgesehen werden. Zudem ist es erforderlich, je nach Ausführung des Flurförderzeugs, beispielsweise Niederhubwagen oder Hochhubwagen oder Doppelstock-Hochhubwagen bzw. Mitgängerbetrieb oder Mitfahrerbetrieb eine Einfachrolle oder eine Doppelrolle als Stützrolle vorzusehen.

Bei bekannten Flurförderzeugen wird für jeden Typ von Flurförderzeug (Gabelhubwagen, beispielsweise Niederhubwagen oder Hochhubwagen oder Doppelstock-Hochhubwagen; Schlepper oder Kommissionierer, beispielsweise Niederhub- oder Hochhubkommissionierer; Mitgängerbetrieb oder Mitfahrerbetrieb) eine jeweils an das Flurförderzeug hinsichtlich der Art der Stützrolle (Einfachrolle oder Doppelrolle) und hinsichtlich der Art des Abstützelements angepasste Stützrolle mit unterschiedlichen Schwingen und Drehschemeln hergestellt, so dass sich ein hoher Herstellaufwand für die hohe Variantenzahl von unterschiedlichen Stützrollen bei verschiedenen Typen von Flurförderzeug ergibt.

Der vorliegenden Erfindung liegt die Aufgabe zugrunde, ein Flurörderzeug mit einer Stützrolle der eingangs genannten Gattung zur Verfügung zu stellen, das hinsichtlich der Veränderung des Aufstandspunktes der Stützrolle auf der Fahrbahn bei einer Bewegung in vertikaler Richtung verbessert ist und bei dem eine hohe Variantenzahl von unterschiedlichen Stützrollen mit geringem Bauaufwand herstellbar ist.

Diese Aufgabe wird erfindungsgemäß dadurch gelöst, dass die Stützrolle mittels einer Parallelogrammführung an dem Antriebsteil höhenbeweglich angeordnet ist, wobei die Parallelogrammführung einen Befestigungsträger aufweist, der an dem Antriebsteil befestigt ist, und zwei in vertikaler Richtung beabstandete und parallel zueinander angeordnete Lenker aufweist, wobei die Lenker jeweils mittels einer Lenkerdrehachse an dem Befestigungsträger gelenkig befestigt sind, sowie einen Stützrollenträger aufweist, an dem die Stützrolle befestigbar ist, wobei der Stützrollenträger mittels jeweils einer Halterdrehachse an den beiden Lenkern gelenkig befestigt ist, wobei die beiden Lenkerdrehachsen und die beiden Halterdrehachsen ein Parallelogramm bilden. Mit einer erfindungsgemäßen Parallelogrammführung kann bei einem Verschleiß des Antriebsrades eine im Wesentlichen reine vertikale Bewegung der Stützrolle erzielt werden, die zu einer lediglich geringen Veränderung des Aufstandspunktes der Stützrolle auf der Fahrbahn führt. Darüber hinaus ermöglicht es eine derartige Parallelogrammführung auf einfache Weise, an dem Stützrollenträger der Parallelogrammführung unterschiedliche Arten von Stützrollen zu befestigen sowie zwischen einem der beiden Lenker und dem Befestigungsträger der Parallelogrammführung unterschiedliche Arten von Abstützelementen anzuordnen, so dass eine hohe Variantenzahl von unterschiedlichen Stützrollen für unterschiedliche Typen von Flurförderzeugen unter Verwendung einer baugleichen Parallelogrammführung, an die unterschiedliche Arten von Stützrollen und Abstützelementen angebaut werden können, mit geringem Herstellaufwand und Bauaufwand herstellbar ist.

Gemäß einer vorteilhaften Ausführungsform der Erfindung ist die Stützrolle in dem Stützrollenträger um eine vertikale Drehachse drehbar gelagert und als Nachlaufrolle ausgebildet, bei der eine horizontale Drehachse der Stützrolle von der vertikalen Drehachse beabstandet ist. Hiermit wird mit geringem Bauaufwand erzielt, dass sich die an dem Stützrollenträger befestigte Stützrolle bei einer Kurvenfahrt selbstständig an die Fahrtrichtung anpassen kann.

Bevorzugt weist die Stützrolle einen Stützrollenhalter auf, in dem die Stützrolle um die horizontale Drehachse drehbar gelagert ist, und ist der Stützrollenhalter in dem Stützrollenträger um die vertikale Drehachse drehbar gelagert. Mit einem derartigen Stützrollenhalter, in dem die Stützrolle um die horizontale Drehachse drehbar gelagert ist, kann auf einfache Weise die Stützrolle um die vertikale Drehachse drehbar in dem Stützrollenträger gelagert werden.

Gemäß einer vorteilhaften Ausgestaltungsform der Erfindung weist der Stützrollenträger zur Lagerung des Stützrollenhalters eine Rohrhülse auf.

Bevorzugt weist der Stützrollenhalter einen Lagerzapfen auf, der mittels einer Drehlagerung in der Rohrhülse drehbar gelagert ist.

Mit einem eine Rohrhülse umfassenden Stützrollenträger und einem in der Rohrhülse aufgenommenen Zapfen des Stützrollenhalters kann mit geringem Bauaufwand eine drehbare Lagerung des Stützrollenhalters in dem Stützrollenträger um eine vertikale Drehachse erzielt werden.

Die Stützrolle kann gemäß einer Ausgestaltungsform der Erfindung eine Einzelrolle aufweisen.

Die Stützrolle kann gemäß einer alternativen Ausgestaltungsform der Erfindung eine Doppelrolle aufweisen.

Gemäß einer vorteilhaften Weiterbildung der Erfindung ist an dem Befestigungsträger ein einstellbarer Anschlag angeordnet, der die Höhenbewegung der Stützrolle begrenzt. Mit einem einstellbaren Anschlag kann auf einfache Weise die maximale Höhenbewegung der Stützrolle, beispielsweise für einen maximalen Verschleiß des Antriebsrades, begrenzt werden.

Vorteile ergeben sich, wenn der einstellbare Anschlag mit dem Stützrollenträger in Wirkverbindung bringbar ist. Hierdurch ergibt sich beim Anliegen des Stützrollenträgers an dem Anschlag ein günstiger Kraftfluss, bei dem die Lenker der Parallelogrammführung nicht belastet werden.

Gemäß einer bevorzugten Weiterbildung der Erfindung ist zwischen dem Befestigungsträger und einem der beiden Lenker eine Feder-und/oder Dämpfereinrichtung angeordnet. Bei der erfindungsgemäßen Parallelogrammführung kann auf einfache Weise zwischen dem Befestigungsträger und einem der beiden Lenker eine Feder-und/oder Dämpfereinrichtung als Abstützelement angeordnet werden, um die Stützrolle in vertikaler Richtung federnd und/oder gedämpft am Antriebsteil abzustützen.

Die Feder-und/oder Dämpfereinrichtung ist gemäß einer Ausgestaltungsform der Erfindung als Gummifeder ausgebildet. Für Flurförderzeuge im niedrigen Leistungsbereich kann hierbei mit geringem Bauaufwand unter Verwendung der einheitlichen Parallelogrammführung eine gefederte Stützrolle hergestellt werden.

Die Feder-und/oder Dämpfereinrichtung ist gemäß einer alternativen Ausgestaltungsform als Stoßdämpfer mit Feder ausgebildet. Für Flurförderzeuge im mittleren Leistungsbereich kann hierbei mit geringem Bauaufwand unter Verwendung der einheitlichen Parallelogrammführung eine gefederte und gedämpfte Abstützung der Stützrolle hergestellt werden.

Die Feder-und/oder Dämpfereinrichtung ist gemäß einer alternativen Ausgestaltungsform als Hydraulikzylinder ausgebildet, der absperrbar ist. Für Flurförderzeuge im hohen Leistungsbereich kann hierbei mit geringem Bauaufwand unter Verwendung der einheitlichen Parallelogrammführung ein vollhydraulisches System für die Abstützung der Stützrolle hergestellt werden, bei der durch Absperren des Hydraulikzylinders die vertikale Bewegung der Stützrolle blockierbar ist, wodurch eine hohe seitliche Stabilität des Flurförderzeugs, beispielsweise bei einer Kurvenfahrt erzielbar ist.

Gemäß einer Ausgestaltungsform der Erfindung ist der Lenker der Parallelogrammführung jeweils als Einzellenker ausgebildet.

Gemäß einer Ausgestaltungsform der Erfindung ist der Lenker der Parallelogrammführung jeweils als Doppellenker ausgebildet.

Vorteile ergeben sich, wenn gemäß einer vorteilhaften Weiterbildung der Erfindung die Parallelogrammführung mit einer den Hub der Stützrolle erfassenden Sensoreinrichtung versehen ist. Hierdurch können mit geringem zusätzlichen Bauaufwand Varianten von Stützrollen mit einer Verstellwegmessung hergestellt werden, die beispielsweise eine Verschleißmessung des Antriebsrades ermöglicht.

Vorteile ergeben sich, wenn gemäß einer vorteilhaften Weiterbildung der Erfindung die Parallelogrammführung mit einer die Aufstandskraft der Stützrolle auf einer Fahrbahn erfassenden Sensoreinrichtung versehen ist. Hierdurch können mit geringem zusätzlichen Bauaufwand Varianten von Stützrollen mit einer Messung der Aufstandskraft der Stützrolle hergestellt werden. Durch die Messung der Aufstandskraft der Stützrolle kann in Verbindung mit einem absperrbaren Hydraulikzylinder als Abstützelement eine Erhöhung der seitlichen Stabilität des Flurförderzeugs erzielt werden.

Die Parallelogrammführung, die aus dem Befestigungsträger, den Lenkern und dem Stützrollenträger besteht, ist erfindungsgemäß weiterhin als Modulträger eines Baukastensystems ausgebildet, wobei das Baukastensystem zumindest zwei verschiedene Stützrollen als Baukastenkomponenten und zumindest zwei verschiedene Feder-und/oder Dämpfereinrichtung als Baukastenkomponenten aufweist, wobei die verschiedenen Baukastenkomponenten an der als Modulträger ausgebildeten Parallelogrammführung befestigbar sind. Die Ausführung der Parallelogrammführung als baugleicher Modulträger eines Baukastensystems mit unterschiedlichen Stützrollen und unterschiedlichen Feder-und/oder Dämpfereinrichtungen ermöglicht es auf einfache Weise, mit einer einheitlichen und baugleichen Parallelogrammführung unterschiedliche Arten von Stützrollen mit unterschiedlichen Arten von Feder-und/oder Dämpfereinrichtung herzustellen, so dass eine hohe Variantenzahl von unterschiedlichen Stützrollen für unterschiedliche Typen von Flurförderzeugen unter Verwendung einer baugleichen Parallelogrammführung, an die unterschiedliche Arten von Stützrollen und Feder-und/oder Dämpfereinrichtung angebaut werden können, mit geringem Herstellaufwand herstellbar ist. Hierdurch wird ein modulares Konzept erzielt, das aus der einheitlichen und baugleichen Parallelogrammführung und unterschiedlichen Stützrollen als Modulkomponente und unterschiedlichen Feder-und/oder Dämpfereinrichtungen als weitere Modulkomponente besteht. Ein derartiges modulares Konzept ermöglicht es mit geringem Herstellaufwand unter Verwendung einer baugleichen Parallelogrammführung, an verschiedene Typen von Flurförderzeugen (Gabelhubwagen, beispielsweise Niederhubwagen oder Hochhubwagen oder Doppelstock-Hochhubwagen; Schlepper oder Kommissionierer, beispielsweise Niederhub- oder Hochhubkommissionierer; Mitgängerbetrieb oder Mitfahrerbetrieb) angepasste Stützrollen mit geringem Herstellaufwand herzustellen.

Das Baukastensystem umfasst vorteilhafterweise eine Einzelrolle und eine Doppelrolle als Baukastenkomponenten für verschiedene Stützrollen. Hierdurch kann mit geringem Bauaufwand mit dem erfindungsgemäßen modularen Baukastenkonzept für Flurförderzeuge, die im Mitgängerbetrieb betrieben werden, eine Stützrolle mit einer Einzelrolle und für Flurförderzeuge, die im Mitfahrerbetrieb betrieben werden, eine Stützrolle mit einer Doppelrolle hergestellt werden.

Das Baukastensystem umfasst vorteilhafterweise eine Gummifeder, einen Stoßdämpfer mit Feder und einen absperrbaren Hydraulikzylinder als Baukastenkomponenten für verschiedene Feder-und/oder Dämpfereinrichtungen. Hierdurch kann mit geringem Bauaufwand mit dem erfindungsgemäßen modularen Baukastenkonzept für Flurförderzeuge im niedrigen Leistungsbereich unter Verwendung der Gummifeder eine gefederte Stützrolle hergestellt werden, für Flurförderzeuge im mittleren Leistungsbereich unter Verwendung des Stoßdämpfers mit der Feder eine gefederte und gedämpfte Abstützung der Stützrolle hergestellt werden und für Flurförderzeuge im hohen Leistungsbereich unter Verwendung des absperrbaren Hydraulikzylinders ein vollhydraulisches System mit einer blockierbaren Stützrolle hergestellt werden.

Weitere Vorteile und Einzelheiten der Erfindung werden anhand des in den schematischen Figuren dargestellten Ausführungsbeispiels näher erläutert. Hierbei zeigt
- Figur 1: ein erfindungsgemäßes Flurförderzeug in einer perspektivischen Ansicht,
- Figur 2: eine erfindungsgemäße Stützrolle in einer schematischen Darstellung,
- Figur 3: eine erfindungsgemäße Stützrolle in einer Seitenansicht und
- Figur 4: ein Baukastensystem zur Herstellung verschiedener erfindungsgemäßer Stützrollen.

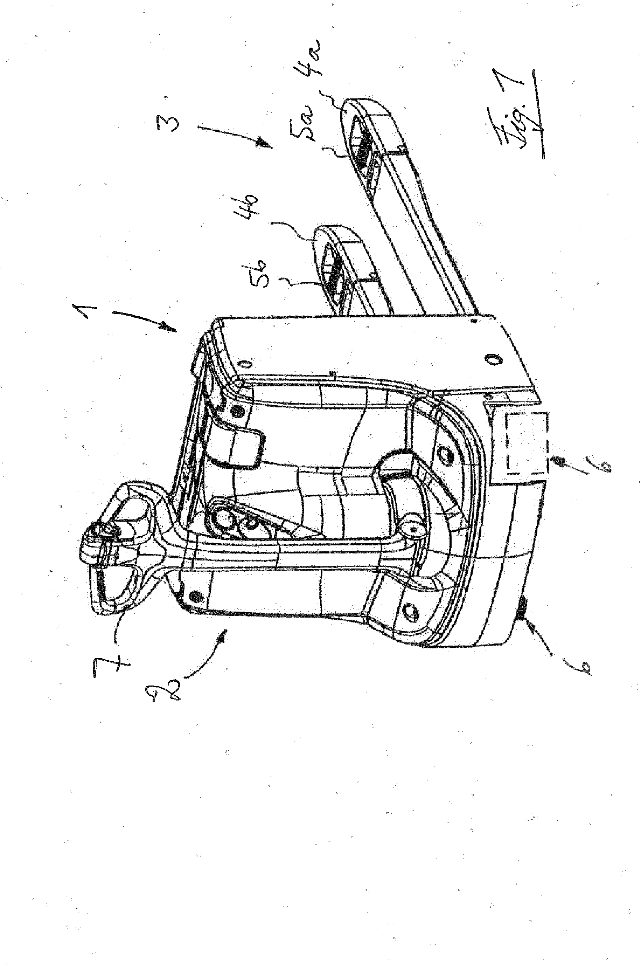

In Figur 1 ist ein Flurförderzeug 1 mit einer erfindungsgemäßen Stützrolle 6 in einer perspektivischen Ansicht dargestellt. Das Flurförderzeug 1 ist im dargestellten Ausführungsbeispiel als Hubwagen, beispielsweise Gabelhubwagen, ausgebildet.

Das Flurförderzeug 1 weist einen Antriebsteil 2 und einen relativ zu dem Antriebsteil 2 anhebbaren und absenkbaren Lastteil 3 auf. Der Lastteil 3 weist zwei seitlich beabstandete Lastarme 4a, 4b auf, die sich mit jeweils mindestens einer Lastrolle 5a, 5b auf einer Fahrbahn abstützen.

In dem Antriebsteil 2 befinden sich die für den Antrieb des Flurförderzeugs erforderlichen Aggregate, beispielsweise ein elektrischer Fahrantriebsmotor und ein elektrischer Pumpenmotor, der eine Hydraulikpumpe zur Versorgung einer hydraulischen Hubvorrichtung antreibt.

Der an dem Antriebsteil 2 anhebbar und absenkbar angeordnete Lastteil 3 umfasst ein Batteriefach für eine Traktionsbatterie, die das elektrische Antriebssystem des Flurförderzeugs 1 mit elektrischer Energie versorgt.

Im Bereich des Antriebsteils 2 steht das Flurförderzeug 1 mit einem lenkbaren, in der dargestellten Ansicht nicht ersichtlichen Antriebsrad und mit mindestens einer Stützrolle 6 auf der Fahrbahn auf. Die Lenkung des Antriebsrads erfolgt mittels einer Lenkdeichsel 7 um eine vertikale Achse des Antriebsrades.

Das erfindungsgemäße Flurförderzeug 1 weist in dem dargestellten Ausführungsbeispiel ein Fünfradfahrwerk auf, wobei das Antriebsrad in Fahrzeuglängsrichtung mittig angeordnet ist und die beiden Stützrollen 6 jeweils in seitlicher Richtung beabstandet zu dem lenkbaren Antriebsrad am Antriebsteil 2 angeordnet sind. Alternativ kann das Flurförderzeug 1 ein Vierradfahrwerk aufweisen, wobei das Antriebsrad an einer Fahrzeugseite angeordnet ist und nur eine einzige Stützrolle 6 vorgesehen ist, die in seitlicher Richtung beabstandet zu dem lenkbaren Antriebsrad an der gegenüberliegenden Fahrzeugseite am Antriebsteil 2 angeordnet ist.

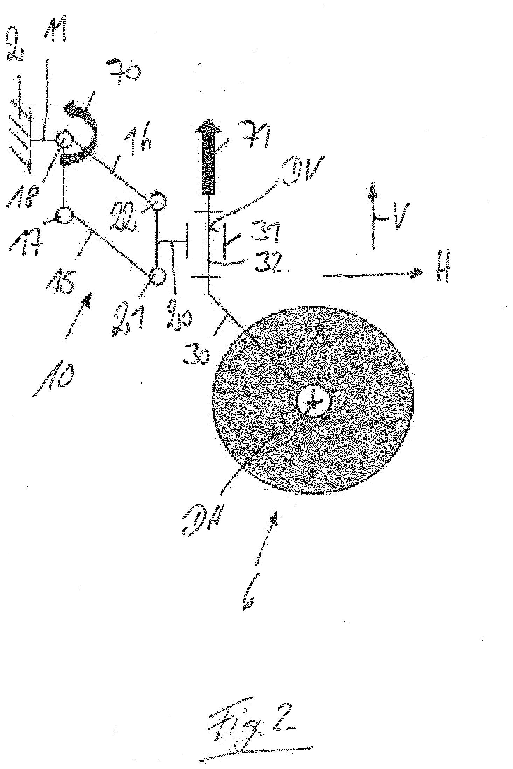

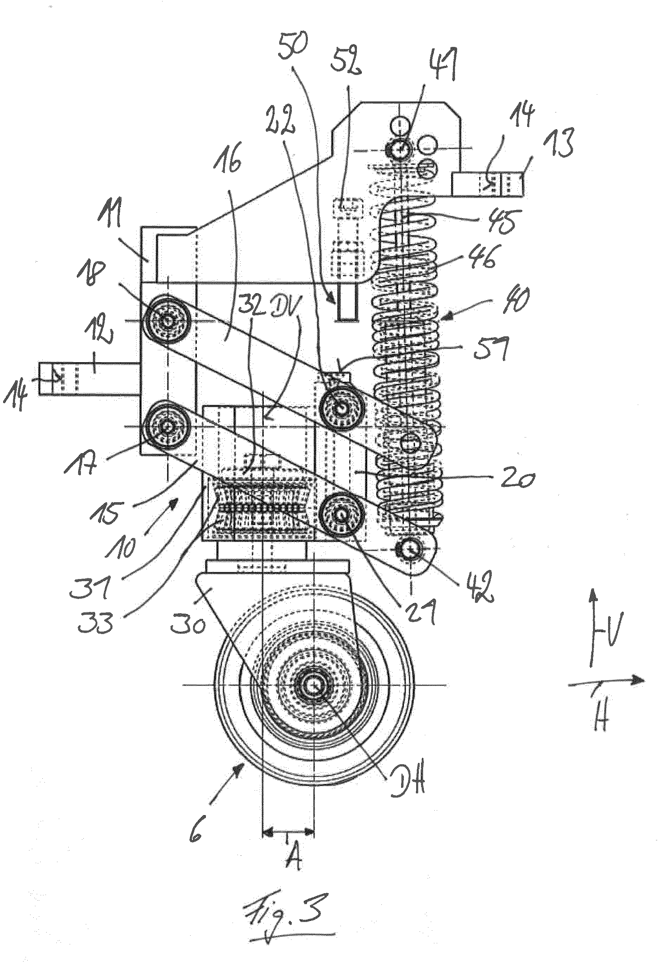

In den Figuren 2 und 3 ist eine erfindungsgemäße Stützrolle 6 in einer vergrößerten Darstellung dargestellt.

Die Stützrolle 6 ist in vertikaler Richtung V beweglich an dem Antriebsteil 2 angeordnet. Die erfindungsgemäße Stützrolle 6 ist mittels einer Parallelogrammführung 10 an dem Antriebsteil 2 in vertikaler Richtung V beweglich angeordnet.

Die Parallelogrammführung 10 weist einen Befestigungsträger 11 auf, der an dem Antriebsteil 2 befestigbar ist. Wie in der Figur 3 näher ersichtlich ist, ist der Befestigungsträger 11 mit Flanschplatten 12, 13 versehen, mittels denen der Befestigungsträger 11 an dem Antriebsteil 2 des Flurförderzeugs 1 befestigbar ist. Hierzu können Schraubverbindungen vorgesehen sein, die in Aufnahmebohrungen 14 der Flanschplatten 12, 13 angeordnet sind.

Die Parallelogrammführung 10 weist weiterhin zwei in vertikaler Richtung V voneinander beabstandete und parallel zueinander angeordnete Lenker 15, 16 auf. Im dargestellten Ausführungsbeispiel ist der Lenker 15 als unterer Lenker und der Lenker 16 als oberer Lenker ausgeführt. Der Lenker 15 ist mittels einer Lenkerdrehachse 17 an dem Befestigungsträger 11 gelenkig befestigt. Entsprechend ist der Lenker 16 mittels einer Lenkerdrehachse 18 an dem Befestigungsträger 11 gelenkig befestigt.

Die Parallelogrammführung 10 weist weiterhin einen Stützrollenträger 20 auf, an dem die Stützrolle 6 befestigbar ist. Der Stützrollenträger 20 ist mittels einer Halterdrehachse 21 an dem unteren Lenker 15 und mittels einer Halterdrehachse 22 an dem oberen Lenker 16 gelenkig befestigt.

Die beiden Lenkerdrehachsen 17, 18 sind in vertikaler Richtung V fluchtend übereinander angeordnet. Entsprechend sind die Halterdrehachsen 21, 22 in vertikaler Richtung V fluchtend übereinander angeordnet. Die Lenkerdrehachsen 17, 18 sind von den Halterdrehachsen 21, 22 in horizontaler Richtung H beabstandet voneinander angeordnet. Die beiden Lenkerdrehachsen 17, 18 und die beiden Halterdrehachsen 21, 22 sind derart angeordnet, dass diese ein Parallelogramm bilden.

Die Stützrolle 6 ist in dem Stützrollenträger 20 um eine vertikale Drehachse DV drehbar gelagert. Die Stützrolle 6 ist als Nachlaufrolle ausgebildet, bei der eine horizontale Drehachse DH der Stützrolle 6 von der vertikale Drehachse DV in horizontaler Richtung H um einen Abstand A beabstandet ist.

Die Stützrolle 6 weist einen Stützrollenhalter 30 auf, in dem die Stützrolle 6 um die horizontale Drehachse DH drehbar gelagert ist. Der Stützrollenhalter 30 ist in dem Stützrollenträger 20 um die vertikale Drehachse DV drehbar gelagert.

Der Stützrollenträger 20 weist zur Lagerung des Stützrollenhalters 30 eine Rohrhülse 31 auf. Der Stützrollenhalter 30 weist einen Lagerzapfen 32 auf, der mittels einer Drehlagerung 33, beispielsweise einer Wälzlager umfassenden Lagerung, in der Rohrhülse 31 um die vertikale Drehachse DV drehbar gelagert ist.

Zwischen dem Befestigungsträger 11 und einem der beiden Lenker 15, 16, im dargestellten Ausführungsbeispiel dem unteren Lenker 15, ist - wie in der Figur 3 näher dargestellt ist - eine Feder-und/oder Dämpfereinrichtung 40 als Abstützelement zur Abstützung der Stützrolle 6 angeordnet. Die Feder-und/oder Dämpfereinrichtung 40 ist an einem ersten Ende an dem Befestigungsträger 11 befestigt. Hierzu kann ein entsprechender Befestigungsbolzen 41 vorgesehen sein. Zur Aufnahme des Befestigungsbolzens 41 können an dem Befestigungsträger 11 mehrere unterschiedlich angeordnete Aufnahmebohrungen ausgebildet sein. Die Feder- und/oder Dämpfereinrichtung 40 ist an einem zweiten Ende an dem Lenker 15 befestigt. Hierzu kann ein entsprechender Befestigungsbolzen 42 vorgesehen sein. Im dargestellten Ausführungsbeispiel ist die Feder-und/oder Dämpfereinrichtung 40 als Stoßdämpfer 45, beispielsweise Hydraulikstoßdämpfer, mit einer Feder 46 ausgebildet. Die Feder 46 ist konzentrisch zu dem Stoßdämpfer 45 angeordnet und der Stoßdämpfer 45 ist innerhalb der Feder 46 angeordnet.

An dem Befestigungsträger 11 ist in dem dargestellten Ausführungsbeispiel ein einstellbarer Anschlag 50 angeordnet, der die Hubbewegung der Stützrolle 6 in vertikaler Richtung V nach oben begrenzt. Der Stützrollenträger 20 weist eine Anschlagfläche 51 auf, mit der der einstellbare Anschlag 50 in Wirkverbindung bringbar ist. Im dargestellten Ausführungsbeispiel, ist der einstellbare Anschlag 50 von einer Einstellschraube 52 gebildet, die in eine Gewindebohrung des Befestigungsträgers 11 einschraubbar ist.

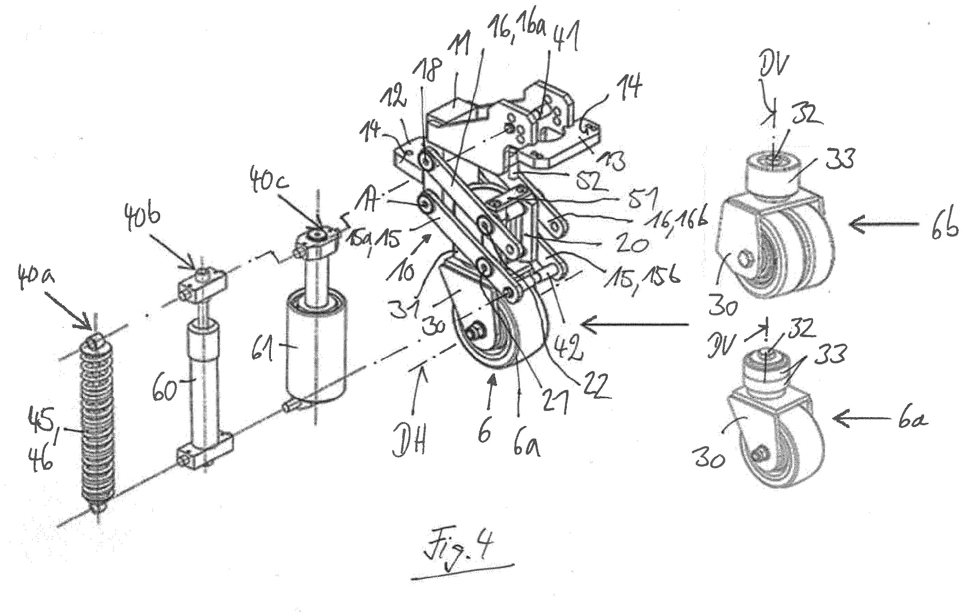

In der Figur 4 ist ein Baukastensystem dargestellt, mit dem unterschiedliche erfindungsgemäße Stützrollen 6 für verschiede Typen von Flurförderzeugen 1 hergestellt werden können.

Die Parallelogrammführung 10, die aus dem Befestigungsträger 11, den beiden Lenkern 15, 16 und dem Stützrollenträger 20 gebildet ist, ist bei dem Baukastensystem als Modulträger ausgebildet, der für alle unterschiedlichen Varianten von Stützrollen 6 identisch und somit baugleich aufgebaut ist.

Das Baukastensystem umfasst zumindest zwei verschiedene Arten von Stützrollen 6a, 6b als Baukastenkomponenten, die an dem Stützrollenträger 20 und somit der Parallelogrammführung 10 montiert werden können. In dem dargestellten Ausführungsbeispiel umfasst das Baukastensystem eine Einzelrolle 6a und eine Doppelrolle 6b als Baukastenkomponenten für verschiedene, unterschiedliche Stützrollen 6. Diese Baukastenkomponete besteht aus einer Einzelrolle 6a bzw. einer Doppelrolle 6b, einem entsprechenden Stützrollenhalter 30 mit Lagerzapfen 32 und der Drehlagerung 33.

Das Baukastensystem umfasst zumindest zwei verschiedene Feder-und/oder Dämpfereinrichtungen 40a, 40b, 40c als Baukastenkomponenten, die an dem Befestigungsträger 11 und einem der beiden Lenker 15, 16, im dargestellten Ausführungsbeispiel dem unteren Lenker 15, und somit an der Parallelogrammführung 10 montiert werden können. In dem dargestellten Ausführungsbeispiel umfasst das Baukastensystem eine Gummifeder 60, einen Stoßdämpfer 45 mit Feder 46 und einen absperrbaren Hydraulikzylinder 61 als Baukastenkomponenten für verschiedene, unterschiedliche Feder-und/oder Dämpfereinrichtungen 40a, 40b, 40c.

Wie in der Figur 4 ersichtlich ist, sind die Lenker 15, 16 der Parallelogrammführung 10 jeweils als Doppellenker ausgebildet, die aus zwei seitlich beabstandeten Lenkerstangen 15a, 15b bzw. 16a, 16b bestehen, zwischen denen der Stützrollenträger 20 angeordnet ist. Mit derartigen Doppellenkern können bei geringen Abmessungen der Lenkerdrehachsen 17, 18 und der Halterdrehachsen 21, 22 die Belastungen über die Lebensdauer des Flurförderzeugs 1 aufgenommen werden. Es versteht sich, dass bei geringeren Belastungen und/oder größeren Abmessungen der Lenkerdrehachsen 17, 18 und der Halterdrehachsen 21, 22 die Lenker 15, 16 auch nur jeweils als Einzellenker ausgebildet werden können, die jeweils aus einer einzigen Lenkerstange bestehen.

Bei einem Verschleiß des Antriebsrades verschwenken bei der erfindungsgemäßen Parallelogrammführung 10 die Lenker 15, 16 um die Lenkerdrehachsen 17, 18, wie in der Figur 2 durch den Pfeil 70 verdeutlicht ist, wobei sich die Stützrolle 6 in vertikaler Richtung V nach oben bewegt, wie in der Figur 2 durch den Pfeil 71 verdeutlicht ist, so dass ein Verschleiß des Antriebsrades ausgeglichen werden kann und sich der Aufstandspunktes der Stützrolle 6 auf der Fahrbahn nur geringfügig verändert. Dadurch ergeben sich keine Einschränkungen bei der Übertragung von Antriebskräften und Bremskräften an dem Antriebsrad.

Das Baukastensystem der Figur 4 bildet ein modulares Konzept zur Herstellung verschiedener Stützrollen 6 unter Verwendung einer baugleichen Parallelogrammführung 10. Mit dem Baukastensystem gemäß der Figur 4 können somit unterschiedliche Ausführungen und Varianten der Stützrolle 6 für unterschiedliche Typen von Flurförderzeugen mit einer identisch aufgebauten Parallelogrammführung 10 hergestellt werden. Die aus dem Befestigungsträger 11, den beiden Lenkern 15, 16 und dem Stützrollenträger 20 bestehende Parallelogrammführung 10 ist somit für unterschiedliche Ausführungen und Varianten der Stützrolle 6 identisch aufgebaut. Die für alle unterschiedlichen Ausführungen und Varianten der Stützrollen 6 identisch aufgebaute Parallelogrammführung 10 bildet bei dem Baukastensystem die Schnittstelle zur Befestigung der Stützrolle 6 an dem Antriebsteil 2 des entsprechenden Flurförderzeugs 1.

An die Parallelogrammführung 10 können die unterschiedlichen, verschiedenen Baukastenkomponenten der Stützrollen 6 (Einzelrolle 6a oder Doppelrolle 6b) sowie die unterschiedlichen, verschiedenen Baukastenkomponenten der verschiedenen Feder-und/oder Dämpfereinrichtung 40a, 40b, 40c (Gummifeder 60 oder Stoßdämpfer 41 mit Feder 42 oder absperrbaren Hydraulikzylinder 61) angebaut werden, um an unterschiedliche Flurförderzeuge jeweils angepasste Varianten von Stützrollen 6 herzustellen.

Bei dem Baukastensystem der Figur 4 können an der identisch aufgebauten Parallelogrammführung 10 verschiedene Arten von Feder- und/oder Dämpfereinrichtungen 40a-40c für drei verschiedene Leistungsbereiche von Flurförderzeugen angebaut werden:
- Die Gummifeder 60 für einen niedrigen Leistungsbereich
- Der Stoßdämpfer 41 mit Feder 42 für einen mittleren Leistungsbereich
- Der absperrbare Hydraulikzylinder 61 als voll-hydraulisches System für einen hohen Leistungsbereich

Bei dem Baukastensystem der Figur 4 können an der identisch aufgebauten Parallelogrammführung 10 verschiedene Arten von Stützrollen 6 für unterschiedliche Typen von Flurförderzeugen angebaut werden:
- Die Einzelrolle 6a für im Mitgängerbetrieb von einer Bedienperson betriebene Flurförderzeuge
- Die Doppelrolle 6b für im Mitfahrerbetrieb von einer Bedienperson betriebene Flurförderzeuge

Mit dem Baukastensystem der Figur 4 können auf einfache Weise und mit geringem Herstellaufwand unterschiedliche Ausführungen und Varianten von Stützrollen 6 für unterschiedliche Typen von Flurförderzeugen 1 und unterschiedliche Leistungsniveaus der Flurförderzeuge 1 hergestellt werden, beispielsweise Niederhubwagen oder Hochhubwagen oder Doppelstock-Hochhubwagen, Schlepper oder Kommissionierer, beispielsweise Niederhub- oder Hochhubkommissionierer, jeweils in der Variante für den Mitgängerbetrieb oder für den Mitfahrerbetrieb und/oder mit einem Vierradfahrwerk oder einem Fünfradfahrwerk.

## Patentansprüche

1. Flurförderzeug (1) mit einer Stützrolle (6), wobei das Flurförderzeug (1) einen Antriebsteil (2) aufweist, in dem ein lenkbares Antriebsrad angeordnet ist, wobei die Stützrolle (6) in dem Antriebsteil (2) von dem Antriebsrad seitlich beabstandet angeordnet ist und in vertikaler Richtung (V) beweglich an dem Antriebsteil (2) angeordnet ist, wobei die Stützrolle (6) mittels einer Parallelogrammführung (10) an dem Antriebsteil (2) beweglich angeordnet ist, **dadurch gekennzeichnet, dass** die Parallelogrammführung (10) einen Befestigungsträger (11) aufweist, der an dem Antriebsteil (2) befestigt ist, und zwei in vertikaler Richtung beabstandete und parallel zueinander angeordnete Lenker (15, 16) aufweist, wobei die Lenker (15, 16) jeweils mittels einer Lenkerdrehachse (17, 18) an dem Befestigungsträger (11) gelenkig befestigt sind, sowie einen Stützrollenträger (20) aufweist, an dem die Stützrolle (6) befestigbar ist, wobei der Stützrollenträger (20) mittels jeweils einer Halterdrehachse (21, 22) an den beiden Lenkern (15, 16) gelenkig befestigt ist, wobei die beiden Lenkerdrehachsen (17, 18) und die beiden Halterdrehachsen (21, 22) ein Parallelogramm bilden.

2. Flurförderzeug nach Anspruch 1, **dadurch gekennzeichnet, dass** die Stützrolle (6) in dem Stützrollenträger (20) um eine vertikale Drehachse (DV) drehbar gelagert ist und als Nachlaufrolle ausgebildet ist, bei der eine horizontale Drehachse (DH) der Stützrolle (6) von der vertikale Drehachse (DV) beabstandet ist.

3. Flurförderzeug nach Anspruch 2, **dadurch gekennzeichnet, dass** die Stützrolle (6) einen Stützrollenhalter (30) aufweist, in dem die Stützrolle (6) um die horizontale Drehachse (DH) drehbar gelagert ist, und der Stützrollenhalter (30) in dem Stützrollenträger (20) um die vertikale Drehachse (DV) drehbar gelagert ist.

4. Flurförderzeug nach Anspruch 2 oder 3, **dadurch gekennzeichnet, dass** der Stützrollenträger (20) zur Lagerung des Stützrollenhalters (30) eine Rohrhülse (21) aufweist.

5. Flurförderzeug nach Anspruch 4, **dadurch gekennzeichnet, dass** der Stützrollenhalter (30) einen Lagerzapfen (32) aufweist, der mittels einer Drehlagerung (33) in der Rohrhülse (31) drehbar gelagert ist.

6. Flurförderzeug nach einem der Ansprüche 1 bis 5, **dadurch gekennzeichnet, dass** die Stützrolle (6) eine Einzelrolle (6a) aufweist.

7. Flurförderzeug nach einem der Ansprüche 1 bis 5, **dadurch gekennzeichnet, dass** die Stützrolle (6) eine Doppelrolle (6b) aufweist.

8. Flurförderzeug nach einem der Ansprüche 1 bis 7, **dadurch gekennzeichnet, dass** an dem Befestigungsträger (11) ein einstellbarer Anschlag (50) angeordnet ist, der die Höhenbewegung der Stützrolle (6) begrenzt.

9. Flurförderzeug nach Anspruch 8, **dadurch gekennzeichnet, dass** der einstellbare Anschlag (50) mit dem Stützrollenträger (20) in Wirkverbindung bringbar ist.

10. Flurförderzeug nach einem der Ansprüche 1 bis 9, **dadurch gekennzeichnet, dass** zwischen dem Befestigungsträger (11) und einem der beiden Lenker (15; 16) eine Feder-und/oder Dämpfereinrichtung (40) angeordnet ist.

11. Flurförderzeug nach Anspruch 10, **dadurch gekennzeichnet, dass** die Feder- und/oder Dämpfereinrichtung (40) als Gummifeder (60) ausgebildet ist.

12. Flurförderzeug nach Anspruch 10, **dadurch gekennzeichnet, dass** die Feder- und/oder Dämpfereinrichtung (40) als Stoßdämpfer (45) mit Feder (46) ausgebildet ist.

13. Flurförderzeug nach Anspruch 10, **dadurch gekennzeichnet, dass** die Feder- und/oder Dämpfereinrichtung (45) als Hydraulikzylinder (61) ausgebildet ist, der absperrbar ist.

14. Flurförderzeug nach einem der Ansprüche 1 bis 13, **dadurch gekennzeichnet, dass** der Lenker (15, 16) jeweils als Einzellenker ausgebildet ist.

15. Flurförderzeug nach einem der Ansprüche 1 bis 13, **dadurch gekennzeichnet, dass** der Lenker (15, 16) jeweils als Doppellenker (15a, 15b; 16a, 16b) ausgebildet ist.

16. Flurförderzeug nach einem der Ansprüche 1 bis 15, **dadurch gekennzeichnet, dass** die Parallelogrammführung (10) mit einer den Hub der Stützrolle (6) erfassenden Sensoreinrichtung versehen ist.

17. Flurförderzeug nach einem der Ansprüche 1 bis 16, **dadurch gekennzeichnet, dass** die Parallelogrammführung (10) mit einer die Aufstandskraft der Stützrolle (6) auf einer Fahrbahn erfassenden Sensoreinrichtung versehen ist.

18. Baukastensystem zur Herstellung eines Flurförderzeugs mit einer Stützrolle nach einem der Ansprüche 1 bis 17, **dadurch gekennzeichnet, dass** die Parallelogrammführung (10), die aus dem Befestigungsträger (11), den Lenkern (15, 16) und dem Stützrollenträger (20) gebildet ist, als Modulträger eines Baukastensystems ausgebildet ist, wobei das Baukastensystem zumindest zwei verschiedene Stützrollen (6a, 6b) als Baukastenkomponenten und zumindest zwei verschiedene Feder-und/oder Dämpfereinrichtungen (40a, 40b, 40c) als Baukastenkomponenten aufweist, wobei die verschiedenen Baukastenkomponenten (6a, 6b, 40a, 40b, 40c) an der als Modulträger ausgebildeten Parallelogrammführung (10) befestigbar sind.

19. Baukastensystem nach Anspruch 18, **dadurch gekennzeichnet, dass** das Baukastensystem eine Einzelrolle (6a) und eine Doppelrolle (6b) als Baukastenkomponenten für verschiedene Stützrollen (6) umfasst.

20. Baukastensystem nach Anspruch 18 oder 19, **dadurch gekennzeichnet, dass** das Baukastensystem eine Gummifeder (60), einen Stoßdämpfer (45) mit Feder (46) und einen absperrbaren Hydraulikzylinder (61) als Baukastenkomponenten für verschiedene Feder-und/oder Dämpfereinrichtungen (40) umfasst.

## Claims

1. Industrial truck (1) with a support caster (6), wherein the industrial truck (1) has a drive part (2) in which a steerable drive wheel is arranged, wherein the support caster (6) is arranged in the drive part (2) in a manner spaced apart laterally from the drive wheel and is arranged on the drive part (2) so as to be movable in the vertical direction (V), wherein the support caster (6) is arranged movably on the drive part (2) by means of a parallelogram guide (10), **characterized in that** the parallelogram guide (10) has a fastening carrier (11), which is fastened to the drive part (2), and two links (15, 16), which are spaced apart in the vertical direction and are arranged parallel to each other, wherein the links (15, 16) are each fastened in an articulated manner to the fastening carrier (11) by means of a link axis of rotation (17, 18), and has a support caster carrier (20), to which the support caster (6) is fastenable, wherein the support caster carrier (20) is fastened in an articulated manner to the two links (15, 16) by means of a respective holder axis of rotation (21, 22), wherein the two link axes of rotation (17, 18) and the two holder axes of rotation (21, 22) form a parallelogram.

2. Industrial truck according to Claim 1, **characterized in that** the support caster (6) is mounted in the support caster carrier (20) so as to be rotatable about a vertical axis of rotation (DV) and is configured as a trailing caster in which a horizontal axis of rotation (DH) of the support caster (6) is spaced apart from the vertical axis of rotation (DV).

3. Industrial truck according to Claim 2, **characterized in that** the support caster (6) has a support caster holder (30) in which the support caster (6) is mounted so as to be rotatable about the horizontal axis of rotation (DH), and the support caster holder (30) is mounted in the support caster carrier (20) so as to be rotatable about the vertical axis of rotation (DV).

4. Industrial truck according to Claim 2 or 3, **characterized in that** the support caster carrier (20) has a tubular sleeve (21) for the mounting of the support caster holder (30).

5. Industrial truck according to Claim 4, **characterized in that** the support caster holder (30) has a bearing journal (32) which is mounted rotatably in the tubular sleeve (31) by means of a rotary bearing (33).

6. Industrial truck according to one of Claims 1 to 5, **characterized in that** the support caster (6) comprises an individual caster (6a).

7. Industrial truck according to one of Claims 1 to 5, **characterized in that** the support caster (6) comprises a double caster (6b).

8. Industrial truck according to one of Claims 1 to 7, **characterized in that** an adjustable stop (50) which limits the vertical movement of the support caster (6) is arranged on the fastening carrier (11).

9. Industrial truck according to Claim 8, **characterized in that** the adjustable stop (50) can be brought into operative connection with the support caster carrier (20) .

10. Industrial truck according to one of Claims 1 to 9, **characterized in that** a spring and/or damper device (40) is arranged between the fastening carrier (11) and one of the two links (15; 16).

11. Industrial truck according to Claim 10, **characterized in that** the spring and/or damper device (40) is configured as a rubber spring (60).

12. Industrial truck according to Claim 10, **characterized in that** the spring and/or damper device (40) is configured as a shock absorber (45) with a spring (46) .

13. Industrial truck according to Claim 10, **characterized in that** the spring and/or damper device (45) is configured as a hydraulic cylinder (61) which can be shut off.

14. Industrial truck according to one of Claims 1 to 13, **characterized in that** the link (15, 16) is in each case configured as an individual link.

15. Industrial truck according to one of Claims 1 to 13, **characterized in that** the link (15, 16) is in each case configured as a double link (15a, 15b; 16a, 16b).

16. Industrial truck according to one of Claims 1 to 15, **characterized in that** the parallelogram guide (10) is provided with a sensor device sensing the travel of the support caster (6).

17. Industrial truck according to one of Claims 1 to 16, **characterized in that** the parallelogram guide (10) is provided with a sensor device sensing the contact force of the support caster (6) on a track.

18. Modular system for producing an industrial truck with a support caster according to one of Claims 1 to 17, **characterized in that** the parallelogram guide (10) which is formed from the fastening carrier (11), the links (15, 16) and the support caster carrier (20) is configured as a module carrier of a modular system, wherein the modular system has at least two different support casters (6a, 6b) as modular components and at least two different spring and/or damper devices (40a, 40b, 40c) as modular components, wherein the various modular components (6a, 6b, 40a, 40b, 40c) are fastenable to the parallelogram guide (10) configured as a module carrier.

19. Modular system according to Claim 18, **characterized in that** the modular system comprises an individual caster (6a) and a double caster (6b) as modular components for various support casters (6).

20. Modular system according to Claim 18 or 19, **characterized in that** the modular system comprises a rubber spring (60), a shock absorber (45) with a spring (46), and a hydraulic cylinder (61), which can be shut off, as modular components for various spring and/or damper devices (40).

## Revendications

1. Chariot de manutention (1) muni d'un galet d'appui (6), le chariot de manutention (1) comprenant une partie d'entraînement (2), dans laquelle une roue d'entraînement dirigeable est agencée, le galet d'appui (6) étant agencé de manière espacée latéralement de la roue d'entraînement dans la partie d'entraînement (2) et étant agencé de manière mobile dans la direction verticale (V) sur la partie d'entraînement (2), le galet d'appui (6) étant agencé de manière mobile sur la partie d'entraînement (2) au moyen d'un guidage à parallélogramme (10), **caractérisé en ce que** le guidage à parallélogramme (10) comprend un support de fixation (11), qui est fixé à la partie d'entraînement (2), et comprend deux bielles (15, 16) espacées dans la direction verticale et agencées parallèlement l'une à l'autre, les bielles (15, 16) étant chacune fixées de manière articulée sur le support de fixation (11) au moyen d'un axe de rotation de bielle (17, 18), et comprend un support de galet d'appui (20), sur lequel le galet d'appui (6) peut être fixé, le support de galet d'appui (20) étant fixé de manière articulée sur les deux bielles (15, 16) au moyen à chaque fois d'un axe de rotation de soutien (21, 22), les deux axes de rotation de bielle (17, 18) et les deux axes de rotation de soutien (21, 22) formant un parallélogramme.

2. Chariot de manutention selon la revendication 1, **caractérisé en ce que** le galet d'appui (6) est monté de manière rotative autour d'un axe de rotation vertical (DV) dans le support de galet d'appui (20) et est conçu en tant que galet postérieur, dans lequel un axe de rotation horizontal (DH) du galet d'appui (6) est espacé de l'axe de rotation vertical (DV).

3. Chariot de manutention selon la revendication 2, **caractérisé en ce que** le galet d'appui (6) comprend un soutien de galet d'appui (30), dans lequel le galet d'appui (6) est monté de manière rotative autour de l'axe de rotation horizontal (DH), et le soutien de galet d'appui (30) est monté de manière rotative autour de l'axe de rotation vertical (DV) dans le support de galet d'appui (20).

4. Chariot de manutention selon la revendication 2 ou 3, **caractérisé en ce que** le support de galet d'appui (20) comprend une douille tubulaire (21) pour le montage du soutien de galet d'appui (30).

5. Chariot de manutention selon la revendication 4, **caractérisé en ce que** le soutien de galet d'appui (30) comprend un tourillon (32), qui est monté de manière rotative dans la douille tubulaire (31) au moyen d'un palier rotatif (33).

6. Chariot de manutention selon l'une quelconque des revendications 1 à 5, **caractérisé en ce que** le galet d'appui (6) comprend un galet individuel (6a).

7. Chariot de manutention selon l'une quelconque des revendications 1 à 5, **caractérisé en ce que** le galet d'appui (6) comprend un galet double (6b).

8. Chariot de manutention selon l'une quelconque des revendications 1 à 7, **caractérisé en ce qu'**une butée ajustable (50), qui limite le déplacement en hauteur du galet d'appui (6), est agencée sur le support de fixation (11).

9. Chariot de manutention selon la revendication 8, **caractérisé en ce que** la butée ajustable (50) peut être mise en liaison active avec le support de galet d'appui (20) .

10. Chariot de manutention selon l'une quelconque des revendications 1 à 9, **caractérisé en ce qu'**un dispositif à ressort et/ou à amortisseur (40) est agencé entre le support de fixation (11) et une des deux bielles (15 ; 16).

11. Chariot de manutention selon la revendication 10, **caractérisé en ce que** le dispositif à ressort et/ou à amortisseur (40) est conçu en tant que ressort en caoutchouc (60).

12. Chariot de manutention selon la revendication 10, **caractérisé en ce que** le dispositif à ressort et/ou à amortisseur (40) est conçu en tant qu'amortisseur de chocs (45) à ressort (46).

13. Chariot de manutention selon la revendication 10, **caractérisé en ce que** le dispositif à ressort et/ou à amortisseur (45) est conçu en tant que cylindre hydraulique (61), qui peut être bloqué.

14. Chariot de manutention selon l'une quelconque des revendications 1 à 13, **caractérisé en ce que** la bielle (15, 16) est à chaque fois conçue en tant que bielle individuelle.

15. Chariot de manutention selon l'une quelconque des revendications 1 à 13, **caractérisé en ce que** la bielle (15, 16) est à chaque fois conçue en tant que bielle double (15a, 15b ; 16a, 16b).

16. Chariot de manutention selon l'une quelconque des revendications 1 à 15, **caractérisé en ce que** le guidage à parallélogramme (10) est muni d'un dispositif capteur détectant la course du galet d'appui (6).

17. Chariot de manutention selon l'une quelconque des revendications 1 à 16, **caractérisé en ce que** le guidage à parallélogramme (10) est muni d'un dispositif capteur détectant la force de contact du galet d'appui (6) sur une voie de déplacement.

18. Système modulaire pour la fabrication d'un chariot de manutention muni d'un galet d'appui selon l'une quelconque des revendications 1 à 17, **caractérisé en ce que** le guidage à parallélogramme (10), qui est formé par le support de fixation (11), les bielles (15, 16) et le support de galet d'appui (20), est conçu en tant que support de module d'un système modulaire, le système modulaire comprenant au moins deux galets d'appui différents (6a, 6b) en tant que composants modulaires et au moins deux dispositifs à ressort et/ou à amortisseur différents (40a, 40b, 40c) en tant que composants modulaires, les différents composants modulaires (6a, 6b, 40a, 40b, 40c) pouvant être fixés au guidage à parallélogramme (10) conçu en tant que support de module.

19. Système modulaire selon la revendication 18, **caractérisé en ce que** le système modulaire comprend un galet individuel (6a) et un galet double (6b) en tant que composants modulaires pour différents galets d'appui (6).

20. Système modulaire selon la revendication 18 ou 19, **caractérisé en ce que** le système modulaire comprend un ressort en caoutchouc (60), un amortisseur de chocs (45) à ressort (46) et un cylindre hydraulique (61) pouvant être bloqué en tant que composants modulaires pour différents dispositifs à ressort et/ou à amortisseur (40).
